# EUROPEAN PATENT APPLICATION

(11) **EP 4 428 524 A1**
(43) Date of publication of application: **11.09.2024**
(21) Application number: 23160082.6
(22) Date of filing: 06.03.2023
(51) Int. Cl.: G01N 21/53, G01N 21/82, G01N 21/25, G01N 15/06

(54) **DETECTION DEVICE, KIT AND METHOD**

(71) Applicant: Andersen, Christian Beyschau Sydow, 81479 Munich (DE)
(72) Inventor: Andersen, Christian Beyschau Sydow, 81479 Munich (DE)
(74) Representative: Vossius & Partner Patentanwälte Rechtsanwälte mbB

(57) **Abstract**

The present invention relates to a detection device (10) for non-destructively detecting turbidity of a sample liquid and/or physical properties of particles in the sample liquid arranged in a translucent container (12). The detection device (10) includes a light device (14) to illuminate the sample liquid and an imaging device (16) to capture an image of the illuminated sample liquid. The imaging device (16) is communicatively connectable to an evaluating device (28) to provide data related to the image of the illuminated sample liquid to the evaluating device (28) to determine the turbidity of the sample liquid and/or properties of particles in the sample liquid based on the data related to the image of the illuminated sample liquid. The present invention also relates to a method for non-destructively determining turbidity of a sample liquid, a method for non-destructively detecting properties of particles in a sample liquid, and a detection device (110) and a method for non-destructively detecting a coloration of a sample liquid.

## Description

Liquids are used for a variety of purposes and/or applications, for instance for providing pharmaceutical substances, e.g., drugs and/or dietary supplements. In many cases, it may be advantageous and/or required to check and/or monitor one or more properties of the respective liquid, e.g., during production thereof and/or during storage thereof. For instance, a binding and/or recommended legal and/or regulatory framework, e.g., guidelines, is provided in many countries and/or regions for the quality control of liquids, in particular pharmaceutical substances. In Europe, for example, the European Pharmacopoeia (Ph. Eur.) provides a single reference which defines standards for the quality control of pharmaceutical substances during the entire life cycle of the pharmaceutical substances which must. Similar legal frameworks are in force in at least most other countries and/or regions. This may ensure that the respective liquid has one or more required and/or desired properties. For instance, the solubility of one or more components in a solution, e.g., a pharmaceutical substance, may be checked and/or monitored, e.g., to ensure that a required and/or desired solubility of the one or more components is achieved and maintained.

Moreover, for instance, the presence of one or more substances, such as one or more particles and/or pathogenic substances, e.g., bacteria, in the respective liquid may be checked and/or monitored to ensure the suitability of the liquid for the respective purpose and/or application.

Monitoring pharmaceutical substances may be considered to be of particular relevance, e.g., due to the generally health-related impact pharmaceutical substances may have on an organism, e.g., on humans and/or animals. By monitoring pharmaceutical substances, the safety and/or suitability of the pharmaceutical substances may be ensured in orderto prevent, or at least minimize, adverse effects and/or to ensure that the intended positive effect(s) of the pharmaceutical substances on the target organism, e.g., humans and/or animals, may be achieved.

Moreover, in most countries, drinking water is also monitored on a regular basis to ensure sufficient cleanliness of the drinking water. This may ensure that the drinking water which is provided to the population does not cause any adverse health effects, or at least minimizes adverse health effects, which may be caused by the drinking water.

For instance, the turbidity of liquid substances, e.g., pharmaceutical substances, is often checked and/or monitored in order to provide information relating to one or more qualities, such as the solubility, of the respective pharmaceutical substances. As a further example, the coloration of liquid substances is also often checked and/or monitored to provide information relating to one or more properties of the respective liquid substance.

In many cases, examining the liquid substances still relies heavily on a manual operation and/or manual input by humans. For instance, the liquid substances are often examined visually by a user, e.g., a laboratory worker. For instance, the user may visually compare a sample of the respective liquid substance with a reference substance having one or more predetermined properties, e.g., a predetermined degree of turbidity, in order to determine one or more properties, e.g., a degree of turbidity, of the sample of the respective liquid substance. However, such a manual examination of liquid substances is tedious and/or prone to human error.

Moreover, several analytical devices and methods for determining properties, e.g., a turbidity, of liquid substances, have been proposed in the prior art. For instance, turbidimeters and nephelometers are known from the prior art for determining the turbidity of substances. Moreover, for example, colorimeters and spectrophotometers have been proposed in the prior art for determining a coloration of liquid substances. However, the known devices have several drawbacks. For instance, the known devices and/or methods may negatively affect the sampled liquid substance, e.g., the integrity of the sampled liquid substance. Moreover, for example, most or at least many countries and/or regions have a binding and/or a recommended legal framework for the quality control of substances, in particular pharmaceutical substances. Thus, the provided legal framework(s) place(s) relatively strict requirements on the configuration and/or the operation of the known devices, such as turbidimeters and nephelometers. This may limit the configuration of the known devices and/or may provide one or more disadvantages. For instance, the requirements of the provided legal framework(s) may only be fulfilled by the analytical instruments known from the prior art by employing a destructive analysis of at least a portion of the respective liquids, which may lead to at least a portion of the respective no longer being suitable for further use, e.g., for its intended use and/or for further analysis.

It is therefore an object of the invention to provide a device which facilitates the analysis of substances, in particular liquids in the original container.

This object is achieved by a detection device according to a first aspect of the present disclosure, as defined by the features of claim 1. Preferred embodiments are defined by the features of the dependent claims, respectively.

The detection device may be configured for non-destructively detecting at least one degree of turbidity of a sample liquid and/or one or more physical properties of one or more particles in the sample liquid. The sample liquid may be arranged in at least one at least partially translucent container, in particular as the detection device detects the turbidity of the sample liquid and/or the one or more physical properties of the one or more particles in the sample liquid. Preferably, the container is closed and/or hermetically sealed against the environment.

The term "non-destructively" means that the detection device described herein may be configured to analyze the sample liquid, e.g., detect the turbidity of the sample liquid and/or the one or more physical properties of the one or more particles in the sample liquid, in a manner which does not negatively affect, or only minimally negatively affects, the integrity and/or the properties of the sample liquid such that the sample liquid is not substantially altered in a manner which would prevent or negatively affect the intended use of the sample liquid and/or further analytical techniques for further analyzing the sample liquid. Thus, the sample liquid may be further used, e.g., according to its target purpose, e.g., as a drug, such as a vaccine, and/or may subsequently be analysed in one or more subsequent analyses, e.g., by one or more further analytical methods and/or devices.

As discussed above, the analytical devices known from the prior art often alter one or more properties, e.g., the integrity, of the sampled liquid, e.g., since many known devices require a portion of the liquid to be removed from a larger quantity of the liquid and placed in a separate container, e.g., a cuvette. This may generally lead to a destruction of the analyzed sample liquid, e.g., by altering one or more properties of the sample liquid which may render the sample liquid unusable for its target purpose, e.g., as a drug, such as a vaccine, and/or for further analysis in one or more subsequent analyses.

Hence, the detection device described herein may provide a quicker and/or more efficient analysis procedure for analysing liquids. Moreover, the detection device described herein may also reduce waste, e.g., sample liquids which must be discarded after the respective analysis. Preferably, the detection device is configured such that the sample liquid does not have to be removed from the container for detecting the turbidity of the sample liquid and/or the one or more physical properties of the one or more particles in the sample liquid. Turbidity may also be referred to as, inter alia, opalescence, cloudiness, nephelometric, and/or clarity.

The detection device may include at least one light device configured to generate light in order to at least partially illuminate the sample liquid. The light device may be arranged, in particular relative to the sample liquid and/or the container, to direct the generated light at the sample liquid to at least partially illuminate the sample liquid.

The detection device may further include at least one imaging device configured to capture at least one image of the illuminated sample liquid. The imaging device may be configured as a camera, e.g., a CCD camera or a CMOS camera. The imaging device may include at least one imaging sensor.

The imaging device may be communicatively connectable to an evaluating device to provide data related to the image of the illuminated sample liquid to the evaluating device. The evaluating device may be configured to determine at least one degree of turbidity of the sample liquid and/or one or more properties of one or more particles in the sample liquid based at least on the data related to the image of the illuminated sample liquid.

The detection devices and/or methods known from the prior art, as discussed above, such as turbidimeters and nephelometers, generally directly detect light which is scattered by particles in the sample liquid and/or light which is transmitted through the sample liquid via light detection sensory. This may generally require a portion of the liquid to be removed from a larger quantity of the liquid and placed in a separate container, e.g., a cuvette. This may generally lead to a destruction of the analyzed sample liquid, e.g., by altering one or more properties of the sample liquid which may render the sample liquid unusable for its target purpose, e.g., as a drug, such as a vaccine, and/or for further analysis in one or more subsequent analyses. The above-described procedure may be required of the detection devices and/or methods known from the prior art in order to meet the requirements of a legal framework for regulating the quality control of one or more substances, e.g., pharmaceutical substances, which may be in force in one or more countries and/or regions.

In contrast to the above-referenced devices and methods known from the prior art, the detection device described herein may be based on an image analysis, in particular on an analysis of data of one or more images of the illuminated sample liquid in order to determine at least one degree of turbidity of the sample liquid and/or one or more properties of one or more particles in the sample liquid, as described above. In other words, the detection device described herein may provide a camera-based detection device. This may provide a relatively simple and/or efficient means for analysing the sample liquid to determine at least one degree of turbidity of the sample liquid and/or one or more properties of one or more particles in the sample liquid. Thus, the detection device described herein may provide similar or better results, e.g., with respect to accuracy and/or reliability and/or sensitivity, than the known analytical instruments, such as turbidimeters and nephelometers, while preventing a destruction or alteration of the sample liquid, as described above.

Moreover, the detection device described herein may allow an analysis of the sample liquid, based on the image(s) of the sample liquid, to be performed more flexibly, e.g., independently of the sample liquid, such as at a different location than the sample liquid and/or at any suitable and/or convenient time after the image of the illuminated sample liquid has been generated and/or by a separate device, e.g., a mobile device, such as a smart device. Moreover, this may facilitate monitoring potential changes to one or more properties of the sample liquid, e.g., the turbidity and/or the one or more properties of the particles in the sample liquid, e.g., by comparing multiple images of the sample liquid which were made over a certain time period. For instance, a change in turbidity of a liquid over time, which may be detected e.g., by the detection device and/or by comparing multiple images of the sample liquid made over a certain time period by means of the detection device, may be undesirable.

The imaging device may have a main optical axis and the light device may be arranged to emit light in a direction which intersects the main optical axis of the imaging device at an angle from 35° to 145°, preferably from 65° to 115°. Configuring the angle between the direction in which the light is emitted by the light device and the main optical axis to be from 35° to 145°, preferably from 65° to 115°, may allow an image to be captured by the imaging device which allows the turbidity of the sample liquid and/or the one or more properties of the particles in the sample liquid to be determined in a substantially repeatable and/or relatively accurate manner. In particular, providing such an angle between the direction in which the light is emitted by the light device and the main optical axis may enhance the sensitivity of the detection device for detecting, in particular accurately and/or reliably detecting, the at least one degree of turbidity of the sample liquid and/orthe one or more physical properties of one or more particles in the sample liquid.

For example, the imaging device may be arranged so as to image a sidewall of the container and the light device may be arranged so as to illuminate a top and/or bottom of the container. Alternatively, the imaging device may be arranged so as to image a sidewall of the container and the light device may be arranged so as to illuminate a different section of the sidewall of the container, e.g. wherein the center of the section that is imaged and the center of the section that is illuminated are spaces apart from each other along the sidewall of the container, e.g. by an arc subtending an angle of between 35° to 145°, preferably from 65° to 115°, e.g., approximately 90°.

Moreover, this may reduce the amount of stray light, e.g., which is directed towards the imaging device directly from the light device and/or which is reflected off of an object, e.g., the container, from the light device which may be captured by the imaging device. Thus, configuring the angle between the direction in which the light is emitted by the light device and the main optical axis to be from 35° to 145°, preferably from 65° to 115°, may allow one or more relatively high-quality images of the respective illuminated sample liquid to be captured by the imaging device in a relatively consistent manner.

A main optical axis, within the context of the present disclosure, is to be understood as an imaginary line that defines the path along which light travels into the imaging device. Preferably, the main optical axis coincides with the imaging device's mechanical axis. The imaging device may include one or more lenses, wherein the main optical axis passes through the geometric center of the curvature of at least one, preferably all, of the lenses.

The direction of light emission by the light device, within the context of the present disclosure, is to be understood as an imaginary line that defines the path along which light is propagated from the light device. In other words, the direction of light emission by the light device may be understood as a light propagation axis with respect to light which is generated and emitted by the light device. Preferably, the direction of light emission by the light device coincides with the light device's central axis and/or longitudinal axis.

The detection device described herein may be configured for use in a variety of different technical fields and/or different purposes and/or different applications. Preferably, the detection device may at least be configured for use with pharmaceutical liquids. Thus, the sample liquid may be a pharmaceutical liquid, such as a biologically active compound, e.g., a drug or a vaccine.

The particles, which are present in the sample liquid, may be any type of particles, such as proteinaceous particles, virus particles, small molecules, etc. The sample liquid may initially not contain particles. For instance, some sample liquids may develop particles over time. Alternatively, or additionally, the number of particles in the sample liquid may increase over time.

The detection device may be configured to determine and/or indicate the at least one degree of turbidity in one or more values, preferably in one or more standardized turbidity units, and/or one or more value ranges, preferably in one or more ranges of standardized turbidity units.

The container may be at least partially, preferably completely, transparent. The container may have at least one sidewall, at least one bottom and at least one top opening. The sidewall may be cylindrical. The top opening may be configured to allow extraction of at least a portion of the sample liquid from the container. The top opening may be closed and/or sealed from the environment. The container may be a vial, or a syringe, a cartridge or any other container suitable for housing the sample liquid.

The light device may be any source of light configured to generate and emit light, preferably visible light, to at least partially illuminate the sample liquid. The light device may include one or more LEDs, one or more OLEDs, one or more lasers and/or one or more halogen lights. The light device and/or at least one auxiliary device, which may be configured to interact with the light generated by the light device, may be configured to collimate the light generated by the light device towards the container housing the sample liquid.

Preferably, the light source may include one or more standard illuminants as defined by the International Commission on Illumination (CIE). For instance, the light device may include at least one illuminant C, which substantially mimics shady daylight, and/or at least one illuminant D, which has a spectral distribution which substantially mimics natural daylight around noon in the northern hemisphere. The light source may include one or more standard illuminants as defined in European Pharmacopoeia (Ph. Eur.) 10th Edition which is herewith incorporated by reference in its entirety.

The evaluating device may be included as a component of the detection device described herein. For instance, the evaluating device may include a processing circuit which is at least partially integrated in the imaging device. Alternatively, the evaluating device may be a separate and/or external component, with respect to the detection device. For instance, the evaluating device may include an external processor, such as a pc and/or other computing device, e.g., a smart device. The detection device, may be configured to communicate, preferably wirelessly communicate, with the external processor to transfer data to and/or from the external processor.

The detection device may include a detection chamber in which the container may be at least partially placed to detect the at least one degree of turbidity of the sample liquid and/or the one or more physical properties of the one or more particles in the sample liquid. The detection chamber may be configured to prevent, or at least reduce, stray light from reaching the imaging device. The detection chamber may comprise at least one access device for accessing an interior space of the detection chamber, e.g., for placing the container in the interior space of the detection chamber. Preferably, the access device is closeable to at least partially separate and/or seal the interior space of the detection chamber from the environment.

The physical properties of the one or more particles in the sample liquid, which may be detectable by the detection device described herein, may include a general presence of the particles in the sample liquid, at least one concentration of the particle(s), at least one size of the particle(s), at least one color of the particle(s), at least one total number of particles of the particle(s), at least one type of the particle(s), at least one consistency of the particle(s), at least one light absorbency of the particle(s), at least one origin of the particle(s), at least one light reflectance of the particle(s) and/or at least one concentration of the particles in a predetermined area of the image. However, the aforementioned properties are only exemplary and thus not limiting. In fact, the detection device may be configured to detect one or more further physical properties of the one or more particles in the sample liquid.

The angle between the direction in which the light is emitted by the light device and the main optical axis, as defined above, is preferably adjustably variable. For instance, the light device and/or the imaging device may be configured to be moved, e.g., tilted, with respect to the other of the light device and the imaging device, preferably such that a beam of light emitted by the light device is moved further towards or away from the imaging device. Preferably, at least an angle of substantially 90° is provided or can be provided.

Preferably, the light device may be arranged to emit light in a direction which is substantially perpendicular to the main optical axis, e.g., within +/- 15°, preferably within +/- 10°, more preferably within +/-5° of a 90° angle between the main optical axis and the direction in which the light device is configured to emit light.

The detection device may be configured to generate an image which is a raw image file, i.e., a non-compressed image file. Compressed images, such as jpg images, may not include enough information for an accurate determination of the at least one degree of turbidity of the sample liquid and/or the one or more physical properties of the one or more particles in the sample liquid. Moreover, compressed images, such as jpg images, are often corrected via a white balance which may be disadvantageous for determining the at least one degree of turbidity of the sample liquid and/or the one or more physical properties of the one or more particles in the sample liquid. Raw image files may also make it easier to cover a relatively large turbidity range. Alternatively, or additionally, the imaging device may be configured to capture two or more images with different imaging capturing settings, e.g., different shutter speeds. This may increase the turbidity range which can be captured/determined by the detection device.

The detection device described herein may be configured to conform to the instrument requirements as defined in European Pharmacopoeia (Ph. Eur.) 10th Edition, in particular in sections 2.2.1 ("Clarity and degree of opalescence of liquids") and 2.2.2 ("Degree of coloration of liquids"), in particular with respect to the required measured unit(s), the required measuring range, the required resolution, the required accuracy and/or the required repeatability. Alternatively, or additionally, the detection device described herein may be configured to conform to the instrument requirements as defined by one or more requirements set in other countries and/or regions, such as the USA, China, Japan.

Preferably, the imaging device includes at least one optical element, preferably a lens, preferably a telecentric lens, and at least one image sensor. The optical element is preferably configured to project an image of the illuminated sample liquid onto the image sensor to capture the image of the illuminated sample liquid. The optical element may provide a means for optimizing and/or focusing, preferably in an adjustable manner, the image captured by the imaging device. The image sensor may be an electronic image sensor, such as charge-coupled device (CCD) or an active-pixel sensor (CMOS).

Preferably, the detection device further includes at least one stray light reducing device configured to reduce the amount of stray light which may be captured by the imaging device. Preferably, the detection device, in particular the at least one stray light reducing device, may be configured to meet the requirements regarding stray light as set out in section 2.1.1 of European Pharmacopoeia (Ph. Eur.) 10th Edition. Reducing the amount of stray light which may be captured by the imaging device may enhance the sensitivity of the detection device for detecting, in particular accurately and/or reliably detecting, the at least one degree of turbidity of the sample liquid and/or the one or more physical properties of one or more particles in the sample liquid. This may also allow one or more relatively high-quality images of the respective illuminated sample liquid to be captured by the imaging device in a relatively consistent manner. Preferably, the stray light reducing device includes at least one light absorbing means configured to at least partially absorb light, preferably stray light.

Preferably, the stray light reducing device includes a structural element, preferably a plate or plate-like element, which is positioned on a side of the container which is substantially opposite to the imaging device. The structural element is preferably configured to reduce the amount of stray light which may be captured by the imaging device. The stray light reducing device may be configured as a background to the imaging device, e.g., to provide a background which is substantially free of reflection, or has only minimal reflections. The structural element may be treated via one or more treatments methods to provide the structural element with enhanced light absorbing properties. Preferably, the structural element may be made of and/or treated with ultra-absorbing materials, such as one or more super-black coatings, e.g., VantaBlack^{®}, Metal Velvet^{®}, etc.

Preferably, the light absorbing means includes a coating, preferably a nanotube coating, the coating being configured to at least partially absorb light, preferably visible light, preferably stray light. The coating may be configured as a foil. Alternatively, or additionally, the stray light reducing device may be shaped and/or dimensioned to reduce the amount of environmental light reflection which may be captured by the imaging device, e.g., by means of one or more specific geometrical surface designs that may reduce stray light.

Preferably, the detection device further includes a support device configured to at least partially support the container during operation of the detection device, e.g., at least as the light device at least partially illuminates the sample liquid and the imaging device captures at least one image of the illuminated sample liquid.

The support device may be at least partially translucent or transparent, at least in a transmission section of the support device through which the light emitted by the light device must travel in order to illuminate the sample liquid. The transmission section of the support device may be configured to at least partially receive and/or encompass the container which houses the sample liquid. Alternatively, or additionally, the support device may be configured to at least partially support the container during operation of the detection device such that at least a portion of the light emitted by the light device, which at least partially illuminates the sample liquid, is unperturbed by the support device. In other words, at least a section of the path of light between the light device and the container may be free of the support device. For instance, the support device may include at least one opening through which the light may travel from the light device towards the container which houses the sample liquid. The opening may be configured in a circular shape or as a slit. Preferably, a light guiding device may be at least partially arranged in the opening.

Alternatively, or additionally, the support device may be configured to at least partially support the container at one or more sections of the container which are not arranged between the light device and the sample liquid, e.g., at a neck of the container and/or at one or more sides of the container. For instance, the support device may include or be configured as at least one gripper, e.g., at least one robotic gripper, configured to grip one or more sections of the container, e.g., at a neck of the container and/or at one or more sides of the container. A light stop or light screen may be arranged between the light device and the container, at least during operation of the detection device, and may be configured to limit and/or otherwise alter the light emitted by the light device. In case the support device is arranged at least partially between the light device and the container, at least during operation of the detection device, the light stop or light screen may be integrated into and/or attached to the support device.

The support device may be configured to support a bottom portion and/or at least one sidewall of the container, preferably such that a distance, preferably the shortest distance, between the container and the light device, preferably from where the light device, or a light guiding device configured to guide light from the light device to towards the container, emits light towards the container, is less than 30 mm, more preferably less than 25 mm, more preferably less than 20 mm, more preferably less than 15 mm, more preferably less than 10 mm, more preferably less than 5 mm, more preferably less than 2 mm, more preferably less than 1 mm.

Preferably, the detection device further includes at least one positioning mechanism configured to substantially provide the container in a predetermined position and/or a predetermined orientation. This may provide a relatively consistent position of the container, e.g., relative to the light device and/or the imaging device. This may ensure little to no variation in position, e.g., relative to the light device and/or the imaging device, from one sample liquid to the next. The positioning mechanism may be configured to passively, e.g., without actively moving, and/or actively, e.g., by moving via one or more drive forces and/or moments, preferably automatically, to provide one or more forces onto the container to position the container, e.g., relative to the light device and/or the imaging device. The positioning mechanism may be configured to center the container, e.g., with respect to the light device and/or the imaging device, in particular relative to the main optical axis and/or the direction in which the light device emits light. The positioning mechanism may include one or more features configured to urge the container towards the predetermined (centered) position. The one or more features may include one or more projections, e.g., one or more pins, ridges, etc., which preferably project from a surface of a support device. The projections may be adjustable, e.g., such that said projections may be positioned at various locations, e.g., to adjust the predetermined position. Alternatively, or additionally, the one or more features may include one or more recesses configured to urge the container towards the predetermined (centered) position.

Preferably, the support device includes at least one recess configured to at least partially receive the container as the imaging device captures the image of the illuminated sample liquid. Preferably, a sidewall of the container is at least partially received in the support device, preferably in the at least one recess. The support device may be configured to support the container in a horizontally resting position, i.e., in which the container rest on the support device via the sidewall of the container. Thus, in the horizontally resting position, a longitudinal axis of the container may extend in a substantially horizontal direction, i.e., substantially perpendicularly to the direction of gravity. The shape of the recess may be adapted to at least one outer shape of the container. Alternatively, or additionally, an outer shape of the container may be adapted to at least one shape of the recess. The recess may secure, or at least urge, the container in a substantially stationary position on the support device to prevent, or at least reduce, movement of the container relative to the support device. The recess may also be configured to reduce or limit the amount of light which is scattered directly from a surface of the container to the imaging device. The recess, more specifically a longitudinal axis of the recess, may extend, e.g., in a fixed position and/or orientation and/or in an adjustable position and/or orientation, substantially at an angle of 20° to 40°, preferably 25° to 35°, more preferably at 30°, relative to the main optical axis of the light device, preferably in a longitudinal plane and/or a horizontal plane, which extends substantially perpendicularly to the direction of gravity, of the support device, when the detection device is in a operation state. Providing such an orientation or position of the recess, more specifically the longitudinal axis of the recess, relative to the main optical axis of the light device may (further) optimize the illumination of the sample liquid in the container and/or may enhance the sensitivity of the detection device for detecting, in particular accurately and/or reliably detecting, the at least one degree of turbidity of the sample liquid and/or the one or more physical properties of one or more particles in the sample liquid. Moreover, this may reduce the amount of stray light, e.g., which is directed towards the imaging device directly from the light device and/or which is reflected off of the container and/or the support device which may be captured by the imaging device.

Preferably, the detection device further includes at least one adjusting device configured to adjust a position and/or an orientation of the container relative to the light device and/or the imaging device. This may allow a position and/or an orientation of the container relative to the light device and/or the imaging device to be optimized and/or adapted to the respective application of the detection device, e.g., to minimize reflections on the container which may be caused by the light emitted by the light device. The adjusting device may include one or more actuators configured to effect one or more forces and/or moments to the container to urge or move the container relative to the light device and/or the imaging device to adjust a position and/or an orientation of the container. Preferably, the imaging device is arranged such that the main optical axis of the imaging device is orientated towards a bottom surface of the container. This may enable the imaging device to more effectively and/or more precisely capture particles which are arranged towards or at the bottom of the container. Alternatively, or additionally, the imaging device may be arranged such that the main optical axis of the imaging device is orientated at an angle relative to a longitudinal axis of the container which differs from 90°, i.e., at an angle which is greater or less than 90°. Alternatively, or additionally, the imaging device may be arranged such that the main optical axis of the imaging device is orientated, preferably towards a bottom surface of the container, at an angle relative to the longitudinal axis of the container in the range of 65° to 88°, more preferably 70° to 88°, more preferably 75° to 88°, more preferably 80° to 88°, most preferably 82° to 88°.

Preferably, the recess has a recess depth extending into the support device in at least a section of the support device, wherein the recess depth is dimensioned such that at least 50%, preferably at least 60%, more preferably at least 70%, more preferably at least 80%, more preferably at least 90%, of a wall thickness of the container, preferably at least the entire wall thickness, may be received in the recess. This may reduce the amount of light which is scattered directly from the container surface to the imaging device. Preferably, the recess depth is similar to the wall thickness of the container. For instance, the recess depth may be from 90% to 110% of the wall thickness of the container.

Preferably, the recess extends into the support device at least 0.1 mm deep, more preferably at least 0.2 mm deep, more preferably at least 0.3 mm deep, more preferably at least 0.4 mm deep, more preferably at least 0.5 mm deep, more preferably at least 0.6 mm deep, more preferably at least 0.7 mm deep, more preferably at least 0.8 mm deep, more preferably at least 0.9 mm deep, most preferably at least 1 mm deep.

Preferably, the support device is configured such that a section of the container, which is arranged at an interface between the support device and the container, is substantially flush with a surface of the support device, when the container is supported by the support device. This may more effectively and/or efficiently illuminate the container, more specifically the sample liquid housed in the container. This may also reduce the amount of light which is scattered directly from a surface of the support device and/or a surface of the container to the imaging device.

Preferably, the recess is u-shaped or v-shaped and/or the recess is an elongate notch. In this case, the container may have a body which is substantially cylindrical. The recess may be halfpipe shaped. The recess may be arcuate in cross-section.

Preferably, the light device includes a light guiding device configured to guide the light generated by the light device towards the container. The light guiding device may allow the container, more specifically the sample liquid housed in the container, to be illuminated more effectively and/or efficiently.

Preferably, the detection device, preferably the evaluating device, is configured to provide at least one degree of turbidity of the sample liquid in Nephelometric Turbidity Units (NTU) and/or Formazin Nephelometric Units (FNU) and/or Formazin Turbidity Units (FTU). Further units, such as Concentration Unit (CU), Jackson Turbidity Unit (JTU), etc., may also be provided by the detection device, preferably by the evaluating device.

Preferably, the detection device, preferably the evaluating device, is configured to access one or more pixel intensities of the image of the illuminated sample liquid and compare the pixel intensities with one or more references to determine the degree of turbidity. Preferably, the detection device, preferably the evaluating device, is configured to access and/or determine the one or more pixel intensity values and/or value ranges of the image of the illuminated sample liquid. Accessing the one or more pixel intensities may mean that the detection device, preferably the evaluating device, may be configured to determine the one or more pixel intensities. Alternatively, or additionally, accessing the one or more pixel intensities may mean that the detection device, preferably the evaluating device, may receive and/or retrieve data, e.g., from a databank, such as a cloud and/or other network, which includes information relating to the one or more pixel intensities. The one or more references may be a plurality of pictures of individual reference samples, e.g., Formazin primary standards, i.e., which have predetermined (known) turbidity values (e.g., Formazin units). Alternatively, or additionally, the one or more references may include at least one curve, e.g., determined by a plurality of pictures, preferably of a plurality of pictures of individual reference samples. The one or more curves may represent a correlation, preferably a linear correlation, between scattered intensity and turbidity. The curve may then be used to convert all measurements into turbidity value(s). Alternatively, or additionally, a lookup table may be employed to determine turbidity value(s) from the measurements. The correlation is preferably established based on 4 or more Formazin primary standards.

Preferably, the detection device, preferably the evaluating device, may be configured to determine a degree of turbidity of the sample liquid based on at least one degree of similarity, or identicalness, of the one or more pixel intensities of the image of the illuminated sample liquid and the one or more references, preferably the pixel intensities of one or more images of the one or more references, to determine the degree of turbidity. For instance, the detection device, preferably the evaluating device, may be configured to determine a degree of turbidity of the sample liquid, when a similarity of the one or more pixel intensities of the image of the illuminated sample liquid and the one or more references, preferably the pixel intensities of one or more images of the one or more references, surpasses a certain predetermined threshold and/or is within a certain predetermine range.

Preferably, the references include pixel intensities of at least one image of at least one reference solution. Thus, determining the degree of the turbidity of the sample liquid may be based on a image-to-image comparison, i.e., a comparison of at least one image of at least one reference solution with at least one image of the sample liquid.

Preferably, the detection device is configured to compare, preferably via the evaluating device, the determined degree of turbidity with at least one predetermined threshold degree of turbidity and provide a warning signal if the determined degree of turbidity surpasses the predetermined threshold degree of turbidity. This may indicate to a user that the turbidity of the sample liquid is at an undesirable level and/or unsuitable level and/or unallowable level. This may indicate that the sample liquid is unsuitable for one or more further analyses, such as a determination of a coloration of the sample liquid.

Preferably, the detection device is configured to determine a coloration of the sample liquid and compare, preferably via the evaluating device, the determined coloration with at least one predetermined threshold degree of coloration and provide a warning signal if the determined coloration surpasses the predetermined threshold degree of coloration. This may indicate to a user that the coloration of the sample liquid is at an undesirable level and/or unsuitable level and/or unallowable level. This may indicate that the sample liquid is unsuitable for one or more further analyses, such as a determination of the turbidity of the sample liquid, as described above. The coloration of the sample liquid may be determined by the detection device as described below with respect to the fifth and seventh aspects of the present disclosure.

Preferably, the detection device further includes at least one further light device configured to generate light in order to at least partially illuminate the sample liquid. The further light device may be arranged to emit light in a direction which extends along the main optical axis of the imaging device, preferably substantially towards the imaging device. This may facilitate determining a coloration of the sample liquid, e.g., by providing background lighting behind the container, with respect to a direction which extends from the imaging device towards the container.

The object mentioned at the beginning is also solved by a kit, according to a second aspect of the present disclosure, including a detection device, preferably a detection device according to any of the embodiments described herein and at least one evaluating device, as defined by the features of claim 8. Preferred embodiments are defined by the features of the dependent claims, respectively. The features, embodiments, effects and advantages, as detailed above with respect to the detection device according to the first aspect of the present disclosure, also apply to the kit accordingly.

The evaluating device may be configured to receive data related to an image of an illuminated sample liquid arranged in a container which is provided by the detection device. The evaluating device may be configured to determine at least one degree of turbidity of the sample liquid and/or one or more physical properties of one or more particles in the sample liquid based at least on the data related to the image of the illuminated sample liquid. The kit may also include a storage device configured to store the image data and/or further data. The storage device may be integrated in the evaluating device. Alternatively, the storage device may be an external, e.g., standalone, storage device. The evaluating device may be integrated in the imaging device.

Preferably, the evaluating device is a remote device which is communicatively connectable, preferably via a wireless connection, with the detection device, preferably with at least the imaging device.

Preferably, the detection device, preferably the evaluating device, is configured to provide at least one degree of turbidity of the sample liquid in Nephelometric Turbidity Units (NTU) and/or Formazin Nephelometric Units (FNU) and/or Formazin Turbidity Units (FTU). Further units, such as CU, JTU, etc., also feasible.

The object mentioned at the beginning is also solved by a method, according to a third aspect of the present disclosure, for non-destructively determining a degree of turbidity of a sample liquid arranged in at least one at least partially translucent container using a detection device, preferably detection device according to any of the embodiments described herein, as defined by the features of claim 9. Preferred embodiments are defined by the features of the dependent claims, respectively. The features, embodiments, effects and advantages, as detailed above with respect to the detection device and the kit according to the first aspect and second aspect of the present disclosure, respectively, also apply to the method accordingly.

The method may include the step of accessing one or more pixel intensities of an image of the illuminated sample liquid which is provided by the detection device.

The method may further include the step of comparing the pixel intensities with one or more references to determine the degree of turbidity. The references may be one or more predetermined values of pixel intensities.

Preferably, the references include pixel intensities of at least one image of at least one reference solution. The degree of turbidity of the reference solution may be known/predetermined. The reference turbidity solutions may include, e.g., Formazin or polymer-based standards.

The object mentioned at the beginning is also solved by a method, according to a fourth aspect of the present disclosure, for non-destructively detecting one or more properties of one or more particles in a sample liquid arranged in at least one at least partially translucent container using a detection device, preferably a detection device according to any of the embodiments described herein, as defined by the features of claim 10. Preferred embodiments are defined by the features of the dependent claims, respectively. The features, embodiments, effects and advantages, as detailed above with respect to the detection device and the kit according to the first aspect and the second aspect of the present disclosure, respectively, also apply to the method accordingly.

The method may include the step of identifying the one or more properties from an image of the illuminated sample liquid which is provided by the detection device.

The object mentioned at the beginning is also solved by a detection device, according to a fifth aspect of the present disclosure, for non-destructively detecting at least one coloration of a sample liquid according to a second aspect of the present disclosure, as defined by the features of claim 11. Preferred embodiments are defined by the features of the dependent claims, respectively. The sample liquid may be arranged in at least one at least partially translucent container. The detection device may include at least one light device configured to generate light in order to at least partially illuminate the sample liquid and at least one imaging device configured to capture at least one image of at least a section of the illuminated sample liquid.

The imaging device may be communicatively connectable to an evaluating device to provide data related to the image of the illuminated sample liquid to the evaluating device. The evaluating device may be configured to determine at least one coloration of the sample liquid based at least on the data related to the image of the illuminated sample liquid.

The detection devices and/or methods for determining the coloration of a liquid known from the prior art often require a portion of the liquid to be removed from a larger quantity of the liquid and placed in a separate container, e.g., a cuvette. This may generally lead to a destruction of the analyzed sample liquid, e.g., by altering one or more properties of the sample liquid which may render the sample liquid unusable for its target purpose, e.g., as a drug, such as a vaccine, and/or for further analysis in one or more subsequent analyses. The above-described procedure may be required of the detection devices and/or methods known from the prior art in order to meet the requirements of a legal framework for regulating the quality control of one or more substances, e.g., pharmaceutical substances, which may be in force in one or more countries and/or regions.

In contrast to the above-referenced devices and methods known from the prior art, the detection device for non-destructively detecting a coloration of a sample liquid, as described herein, may be based on an image analysis, in particular on an analysis of data of one or more images of the illuminated sample liquid in order to determine at least one coloration of the sample liquid, as described above. In other words, the detection device described herein may provide a camera-based detection device for determining a coloration of the sample liquid. This may provide a relatively simple and/or efficient means for analysing the sample liquid to non-destructively detect at least one coloration of the sample liquid. Thus, the detection device described herein may provide similar or better results, e.g., with respect to accuracy and/or reliability and/or sensitivity, than the known analytical instruments, such as colorimeters and spectrophotometers, while preventing a destruction or alteration of the sample liquid, as described above. The analysis may be performed in a sealed container, e.g. the container wherein the sample liquid is subsequently delivered to a user and/or consumer.

Moreover, the detection device described herein may allow an analysis of the sample liquid, based on the image(s) of the sample liquid, to be performed more flexibly, e.g., independently of the sample liquid, such as at a different location than the sample liquid and/or at any suitable and/or convenient time after the image of the illuminated sample liquid has been generated and/or by a separate device, e.g., a mobile device, such as a smart device. Moreover, this may facilitate monitoring potential changes to one or more properties of the sample liquid, e.g., the coloration of the sample liquid, e.g., by comparing multiple images of the sample liquid which were made over a certain time period. For instance, a change in coloration of a liquid over time, which may be detected e.g., by the detection device and/or by comparing multiple images of the sample liquid made over a certain time period by means of the detection device, may be undesirable.

The imaging device may be a prism camera, i.e., a camera which includes at least one prism, which may be arranged within the camera and which may separate the light which is generated by the light device and which transilluminates the sample liquid into individual color components, e.g., red, green, and blue, to determine the coloration of the sample liquid. For instance, the prism camera may be configured to separate the light into red, green, and blue components to determine the RGB values of the light. The prism camera may be configured to form a plurality of images, e.g., three images, which are then merged into a single image, e.g., for further analysis. The prism camera may be configured to output, preferably directly, XYZ tristimulus values based on one or more known or determinable properties of the light generated by the light device., e.g., by using a standard illuminant, e.g., D65.

The detection device according to the first aspect of the present disclosure and the detection device according to the fifth aspect of the present disclosure may be combined, e.g., in a single detection device or detection system. However, the first aspect and the fifth aspect of the present disclosure may alternatively be provided independently from each other, i.e., the detection device according to the first aspect of the present disclosure and the detection device according to the fifth aspect of the present disclosure may be separate and/or standalone detection devices which can be used independently from each other. If the detection device according to the first aspect of the present disclosure and the detection device according to the fifth aspect of the present disclosure are combined in a single detection device or detection system, the imaging device(s) included in the detection device according to the first aspect of the present disclosure and the imaging device(s) included in the detection device according to the fifth aspect of the present disclosure may be the same imaging device(s), or at least partially the same imaging device(s). In other words, the detection device according to the first aspect of the present disclosure and the detection device according to the fifth aspect of the present disclosure may share one or more imaging devices for performing the respective function(s) of the respective detection device. Moreover, if the detection device according to the first aspect of the present disclosure and the detection device according to the fifth aspect of the present disclosure are combined in a single detection device or detection system, the light device(s) included in the detection device according to the first aspect of the present disclosure and the light device(s) included in the detection device according to the fifth aspect of the present disclosure may be at least partially the same light device(s). In other words, the detection device according to the first aspect of the present disclosure and the detection device according to the fifth aspect of the present disclosure may share one or more light devices for performing the respective function(s) of the respective detection device.

When the first aspect and the fifth aspect of the present disclosure are combined in a single detection device, the single detection device may be configured to detect at least one degree of turbidity and the at least one coloration of the sample liquid simultaneously and/or in sequence and/or in a time-shifted manner. The detection device combining the first aspect and the fifth aspect of the present disclosure may be configured such that the detection of the at least one degree of turbidity and the at least one coloration of the sample liquid may be performed while maintaining the sample liquid substantially in the same position and/or the same orientation throughout the entire detection process. Preferably, the detection device is configured to detect the at least one degree of turbidity first and then, i.e., subsequently and/or in a time-shifted manner, the coloration of the sample liquid. This may allow the detection of the coloration of the sample liquid to be prevented, if the degree of turbidity of the sample liquid surpasses a predetermined threshold degree of turbidity, since determining the coloration of the sample liquid may be impaired, or even impossible, if a turbidity of the sample liquid surpasses a certain threshold. For instance, the detection device may be configured to compare, preferably via the evaluating device, the determined degree of turbidity with at least one predetermined threshold degree of turbidity and provide a warning signal if the determined degree of turbidity surpasses the predetermined threshold degree of turbidity.

When the first aspect and the fifth aspect of the present disclosure are combined in a single detection device, the single detection device may be configured to adjust a background arranged behind the container, with respect to a direction extending from the imaging device to the container. For the detection of turbidity of the sample liquid, preferably a dark, e.g., a black, background is employed behind the container. For the detection of coloration of the sample liquid, preferably a light colored, e.g., non-black, such as white, background is employed behind the container. Thus, to provide different backgrounds for detecting the turbidity and the coloration of the sample liquid by a single detection device, a background adjusting device configured to adjust the background behind the container may be provided. For instance, the background adjusting device may be configured to selectively displace a background behind the container to provide the appropriate background for the detection of the turbidity and the coloration of the sample liquid, respectively. For instance, a light colored, e.g., non-black, such as white, background may be provided behind the container and the background adjusting device may be configured to selectively place a dark, e.g., a black, background behind the container between the light colored background and the container such that the dark background is arranged behind the container, i.e., between the light colored background and the container, for the detection of the turbidity of the sample liquid and the light colored background is arranged behind the container, with no dark background arranged between the light colored background and the container, for the detection of the coloration of the sample liquid. Alternatively, vice versa, a dark colored background may be provided behind the container and the background adjusting device may be configured to selectively place a light colored background behind the container between the dark background and the container. The light colored background and/or the dark colored background may be configured as displaceable structures, e.g., plates, which are provided with a coating on a surface thereof, i.e., a light colored coating and a dark colored coating, respectively, to provide the respective background properties. The device may be configured to switch the backgrounds manually and/or automatically (e.g. by using a rotating stage that has the two backgrounds on opposite sides thereof and can be turned, e.g. by 180°, to change the background).

Alternatively, or additionally, when the first aspect and the fifth aspect of the present disclosure are combined in a single detection device, the single detection device may include at least two imaging devices, wherein a first imaging device of the at least two imaging devices may be directed towards the dark background and a second imaging device of the at least two imaging devices may be directed towards the light colored background, wherein the first imaging device of the at least two imaging devices may be configured to detect the turbidity of the sample liquid using the dark background and the second imaging device of the at least two imaging devices may be configured to detect the coloration of the sample liquid using the light colored background. The sample liquid may be moved, e.g., via one or more actuators, between at least two positions, the first position being in front of the dark background and the second position being in front of the light colored background, with respect to a direction extending from the respective imaging device towards the container.

The detection device, preferably the evaluating device, may be configured to determine and/or indicate the coloration of the sample liquid in one or more color spaces, such as an RGB color space, an XYZ color space, an L^{∗}a^{∗}b^{∗} color space and/or one or more further color spaces.

Preferably, the detection device, preferably the evaluating device, is configured to adjust the determined coloration based at least on at least one property, preferably at least one light intensity, of the light which is generated by the light device. This may correct and/or compensate for small variations in at least one property, preferably at least one light intensity, over time and/or over an area of the light generated by the light device. For instance, the light intensity and/or the coloration of the light generated and emitted by the light source illuminating the container may vary, which may prevent an accurate determination of the coloration of the sample liquid. This may cause image-to-image variations of the accuracy and/or sensitivity and/or reliability in the determined coloration. Hence, adjusting the determined coloration based at least on at least one property, preferably at least one light intensity and/or at least one coloration, of the light which is generated and emitted by the light device to illuminate the sample liquid may at least partially compensate for such variations in the light generated and emitted by the light device which increase the accuracy of the detection device in determining the coloration of the sample liquid.

Preferably, the detection device, preferably the evaluating device, is configured to determine at least one light intensity and/or at least one coloration of the light, which is emitted by the light device, preferably adjacent to the container and adjust the determined coloration of the sample liquid based on a deviation of the determined intensity and/or coloration of the light from a reference light intensity and/or a reference color, respectively.

The above-described adjustment/correction may be achieved, e.g., by including a portion of the light emitted by the light device in one or more images, the portion of the light being unperturbed by, i.e., not covered by and/or not traversing through, the container and/or the sample liquid. This may allow one or more properties of the light emitted by the light device to be directly analysed, i.e., without travelling through the container and/or the sample liquid. A variation, e.g., a deviation from one or more predetermined values and/or one or more value ranges, of one or more properties, e.g., the light intensity and/or the coloration, of the light emitted by the light device, may then be determined and preferably a white-balance and/or a correction intensity normalization can be performed to the image of the sample liquid.

Preferably, the detection device, preferably the imaging device, is configured to at least partially capture at least one illuminated reference surface which is at least partially illuminated by the light emitted by the light device, and wherein the detection device, preferably the evaluating device, is configured to adjust the determined coloration based on data related to the illuminated reference surface provided by the image. Thus, an image of the (unperturbed) light emitted by the light device may be captured indirectly, i.e., via the illuminated reference surface, by the imaging device. Preferably, the light which illuminates the illuminated reference surface is unperturbed by one or more liquid and/or solid objects, such as the container and/or the sample liquid. Thus, preferably, no such object is arranged between at least a portion of the light device, more specifically a light-emitting surface of the light device, and the illuminated reference surface.

The image in which the illuminated reference surface is captured may be the same image as the image in which the sample liquid is captured for determining the coloration of the sample liquid. Alternatively, the image in which the illuminated reference surface is captured may be a different image than the image in which the sample liquid is captured for determining the coloration of the sample liquid.

The reference surface is preferably an external surface with respect to the container. Preferably, the reference surface is at least a portion of a background surface arranged behind the container, with respect to a direction extending from the imaging device towards the container. Preferably, the illuminated reference surface is larger than a projected area of the container when projected along a main optical axis of the imaging device to the reference surface. The reference surface, in particular when the reference surface is at least a portion of a background surface arranged behind the container, is preferably light colored, e.g., non-black, such as white. The light source, or at least a light-emitting surface of the light source, may not be captured in the image(s). Instead, the light emitted by the light device may illuminate the container, more specifically the sample liquid, and the illuminated reference surface. For this purpose, the light device may be arranged to emit light in a direction which extends from the imaging device towards the container. Preferably, the light device is a ring or semi-ring light, which is preferably arranged at least partially about the imaging device, preferably about an objective or lens of the imaging device.

Preferably, the detection device, preferably the evaluating device, is configured to adjust the determined coloration of the sample liquid based on a deviation of the determined intensity and/or coloration of the light from a reference light intensity and/or a reference coloration determined for the illuminated reference surface, respectively.

Alternatively, or additionally, the imaging device may be configured to capture at least one light device reference surface of a light-emitting section of the light device in the image, and wherein the detection device, preferably the evaluating device, is configured to adjust the determined coloration based on data related to the light device reference surface provided in the image. Thus, according to this configuration, an image of the (unperturbed) light emitted by the light device may be captured directly, i.e., by capturing a light-emitting section of the light device itself in the image. Thus, at least a portion of the imaging device, i.e., a light-emitting section of the light device, is captured in the image to enable an analysis of one of more properties of the light emitted by the light device, e.g., in order to adjust/correct the determined coloration of the sample liquid. The data may include one or more properties, preferably including at least a light intensity, of the reference surface. Preferably, the light-emitting section of the light device in the image which is captured by the imaging device is unperturbed by one or more liquid and/or solid objects, such as the container and/or the sample liquid. Thus, preferably, no such object is arranged between at least a portion of the light-emitting section of the light device and the imaging device, or at least a section of an imaging sensor of the imaging device.

Alternatively, or additionally, the detection device, preferably the imaging device, may be configured to capture at least a portion of the light which is generated by the light device, e.g., without capturing a light-emitting section of the light device, wherein the captured light is unperturbed by the container and/or the sample liquid. Thus, preferably, the captured light does not pass through the sample liquid and/or the container and/or the imaging device is preferably configured to capture the light which is generated by the light device before the light passes through the sample liquid and/or the container. For instance, at least one light guide may divert a fraction of the light generated by the light device to the imaging device, e.g., towards a light detection sensor included in the imaging device.

Alternatively, or additionally, a further device, such as an analysis device and/or a further imaging device, e.g., an external imaging device, may be configured to capture the light such that the detection device, preferably the evaluating device, may be configured to adjust the determined coloration based on data related to the captured light. For instance, at least one light guide may divert a fraction of the light generated by the light device to the further device, e.g., in order to determine one or more properties of the light, e.g., the RGB color space of the light emitted by the light device. The further device may comprise any device configured to measure standard spectral values, e.g., preferably one or more color filters.

Preferably, the detection device, preferably the evaluating device, may be configured to determine the coloration of the sample liquid with pixel subtraction or without pixel subtraction.

The detection device, preferably the evaluating device, may be configured to at least apply at least one RGB correction, i.e., an adjustment in the RGB color space and/or from one color space to another (e.g. from XYZ to L^{∗}a^{∗}b^{∗})

Preferably, the imaging device has a main optical axis and the light device is arranged to emit light in a direction which extends substantially along the main optical axis, preferably (e.g., when emitted light is to be captured directly) towards the imaging device. The reference surface may be arranged behind or next to the container, when viewed from the imaging device. The light device may be configured and arranged to provide background lighting, e.g., by arranging the light device behind the container, with respect to a direction extending form the imaging device towards the container, and/or by illuminating a reference surface, e.g., a background surface, arranged behind the container. The light device may be arranged to emit light towards the imaging device, i.e., as background lighting arranged behind the container with respect to the imaging device, or away from the imaging device, e.g., the light device may be arranged at least partially between the imaging device and the container or behind the imaging device, with respect to a direction extending from the imaging device towards the container, e.g., as a ring light extending at least partially about a lens of the imaging device. Preferably, the reference surface, which may be arranged behind the container or next to the container when viewed from the imaging device, is light colored, e.g., non-black, such as white.

Preferably, the imaging device includes at least one optical element, preferably a lens, preferably a telecentric lens, and at least one image sensor, wherein the optical element is configured to project an image of the illuminated sample liquid onto the image sensor to capture the image of the illuminated sample liquid. The image sensor may be an electronic image sensor, such as a charge-coupled device (CCD) or an active-pixel sensor (CMOS)

Preferably, the light device is arranged on a side of the container which is substantially opposite to the imaging device to provide background lighting to the container.

Preferably, the reference surface is arranged behind the container when viewed along a main optical axis of the imaging device, and wherein the reference surface is largerthan a projected area of the container when projected along the main optical axis.

Preferably, the light device has a light emitting surface which is larger than a projected area of the container which is projected in a direction towards the light device.

Preferably, the evaluating device is configured to determine at least one light intensity and/or at least one coloration of the light, which is emitted by the light device, preferably adjacent to the container. For instance, the imaging device may be configured and arranged to capture, i.e., in at least one image, a section of a reference surface which is illuminated by the light generated by the light device, e.g., a background surface, with respect to a direction from the imaging device towards the container, and/or a section of a light emitting portion of the light device, e.g., a background lighting device, the section being unperturbed, i.e., not covered by, the container. This may allow the coloration of the reference surface and/or the light generated by the light device to be determined, e.g., by the evaluating device, based at least on data related to the captured image.

Preferably, the detection device, preferably the evaluating device, is configured to adjust the determined coloration of the sample liquid based on a deviation of the determined intensity and/or coloration of the light from a reference light intensity and/or a reference coloration determined for the reference surface, respectively. For instance, variations in the intensity and/or coloration of the light emitted by the light device may vary over time and/or over different sections of the emitted light. These variations may be compensated by adjusting the determined coloration of the sample liquid based on a deviation of the determined intensity and/or coloration of the light from a reference light intensity and/or a reference coloration.

Preferably, the detection device further includes at least one further light device configured to generate light in order to at least partially illuminate the sample liquid, wherein the further light device is arranged to emit light in a direction which intersects the main optical axis of the imaging device at an angle from 35° to 145°, preferably from 65° to 115°, wherein the evaluating device is configured to determine at least one degree of turbidity of the sample liquid and/or one or more properties of one or more particles in the sample liquid based at least on the data related to the image of the illuminated sample liquid.

Preferably, the detection device is configured to compare, preferably the evaluating device, the determined degree of turbidity with at least one predetermined threshold degree of turbidity and provide a warning signal if the determined degree of turbidity surpasses the predetermined threshold degree of turbidity. This may allow changes in the turbidity of a sample liquid, at least beyond a certain limit, i.e., past the predetermined threshold degree of turbidity, to be detected and indicated, e.g., to a user, e.g., lab personnel. Moreover, this may generally allow a certain degree of turbidity of the sample liquid, e.g., a degree of turbidity which is outside of acceptable and/or desirable tolerances, to be detected and indicated, e.g., to a user, e.g., lab personnel.

Preferably, the detection device is configured to compare, preferably via the evaluating device, the determined coloration with one or more predetermined coloration criteria, preferably including at least one predetermined coloration threshold, and provide a warning signal if the determined coloration meets and/or does not meet the one or more predetermined coloration criteria.

Preferably, the detection device, preferably the evaluating device, is configured to access one or more color pixel values of the image of the illuminated sample liquid and/or match the color pixel values to reference values to determine a coloration of the sample liquid. Preferably, the reference values are based on pharmacopoeia values, e.g., as provided and/or demanded in European Pharmacopoeia (Ph. Eur.). The detection device, preferably the evaluating device, may be configured to directly output one or more values of the coloration of the sample liquid, e.g., one or more XYZ color space values and/or one or more L^{∗}a^{∗}b^{∗} color space values, of the sample liquid, i.e., without relying on reference values of color standards. Alternatively, the detection device, preferably the evaluating device, may access the reference values and match the color pixel values to reference values to determine a coloration of the sample liquid based on the reference values.

Preferably, the color pixel values and/or reference value include one or more of the following: one or more RGB color space values, one or more XYZ color space values, one or more L^{∗}a^{∗}b^{∗} color space values, one or more CMYK color space values, one or more YIQ color space values, one or more YPbPr color space values, one or more HSV color space values, one or more HSL color space values and/or one or more L^{∗}C^{∗}h color space values. It may be particularly preferable that the color pixel values and/or reference value include at least one or more XYZ color space values and/or one or more L^{∗}a^{∗}b^{∗} color space values.

The object mentioned at the beginning is also solved by a kit, according to a sixth aspect of the present disclosure, including a detection device, preferably a detection device according to the fifth aspect of the invention in accordance with any of the embodiments described herein, and at least one evaluating device. The features, embodiments, effects and advantages, as detailed above with respect to the detection device according to the fifth aspect of the present disclosure, also apply to the kit accordingly. The evaluating device may be configured to receive data relating to at least one image of at least a section of an illuminated sample liquid arranged in at least one at least partially translucent container. The evaluating device may be configured to determine at least one coloration of the sample liquid based at least on the data related to the image of the illuminated sample liquid.

The kit may include a storage device configured to store the image data and/or further data. The storage device may be integrated in the evaluating device. Alternatively, the storage device may be an external, e.g., a standalone, storage device. The evaluating device may be integrated in the imaging device. Alternatively, the evaluating device may be a separate device, e.g., a remote device and/or mobile device. The evaluating device may be integrated in a mobile processing device such as a smartphone, a tablet, a laptop, etc.

The evaluating device may be a remote device which is communicatively connectable, preferably via a wireless connection, with the detection device, preferably with at least the imaging device.

The object mentioned at the beginning is also solved by a method, according to a seventh aspect of the present disclosure, for non-destructively detecting at least one coloration of a sample liquid arranged in at least one at least partially translucent container, preferably by using the detection device according to the fifth aspect of the present disclosure, as defined by the features of claim 15, in accordance with any of the embodiments disclosed herein. Preferred embodiments are defined by the features of the dependent claims, respectively. The features, embodiments, effects and advantages, as detailed above with respect to the detection device and the kit according to the first aspect and second aspect of the present disclosure, respectively, also apply to the method accordingly.

The method may include the step of accessing one or more color pixel values of the image of the illuminated sample liquid which is provided by the detection device.

The method may include the step of matching the color pixel values to one or more reference values to determine a coloration of the sample liquid.

Preferably, the color pixel values and/or the reference values include one or more of the following: one or more RGB color space values, one or more XYZ color space values, one or more L^{∗}a^{∗}b^{∗} color space values, one or more CMYK color space values, one or more YIQ color space values, one or more YPbPr color space values, one or more HSV color space values, one or more HSL color space values and one or more L^{∗}C^{∗}h color space values.

The reference values may be obtainable by a similar method as defined, i.e., for determining the coloration of the sample liquid, e.g., by the detection device according to the fifth aspect of the present disclosure. Alternatively, or additionally, the reference values may be determined by a separate method and/or a separate device. The reference values may be determined by means of a calorimeter, e.g., the LICO colorimeter provided by Hach Company, preferably using one or more reference solutions, e.g., in accordance with pharmacopoeia color standards, e.g., the pharmacopoeia color standards according to Ph. Eur., USP, JP, CP, etc., and/or any other relevant reference solution, e.g., one or more Hazen comparison solutions.

Preferably, the method further includes the step of determining at least one light intensity and/or at least one coloration of the light, which is emitted by the light device, preferably adjacent to the container. Preferably, the method further includes the step of adjusting the determined coloration of the sample liquid based on a deviation of the determined intensity and/or coloration of the light from a reference light intensity and/or a reference coloration, respectively.

The following list of aspects provides alternative and/or further features of the invention:
1. A detection device for non-destructively detecting at least one degree of turbidity of a sample liquid and/or one or more physical properties of one or more particles in the sample liquid , the sample liquid being arranged in at least one at least partially translucent container, the detection device including:
   at least one light device configured to generate light in order to at least partially illuminate the sample liquid; and
   at least one imaging device configured to capture at least one image of at least a section of the illuminated sample liquid, wherein the imaging device is communicatively connectable to an evaluating device to provide data related to the image of the illuminated sample liquid to the evaluating device, the evaluating device being configured to determine at least one degree of turbidity of the sample liquid and/or one or more properties of one or more particles in the sample liquid based at least on the data related to the image of the illuminated sample liquid;
   preferably wherein the imaging device has a main optical axis and the light device is arranged to emit light in a direction which intersects the main optical axis of the imaging device at an angle from 35° to 145°, preferably from 65° to 115°.
2. The detection device according to aspect 1, wherein the imaging device includes at least one optical element, preferably a lens, preferably a telecentric lens, and at least one image sensor, wherein the optical element is configured to project an image of the illuminated sample liquid onto the image sensor to capture the image of the illuminated sample liquid.
3. The detection device according to aspect 1 or 2, further including at least one stray light reducing device configured to reduce the amount of stray light which may be captured by the imaging device.
4. The detection device according to aspect 3, wherein the stray light reducing device includes a structural element, preferably a plate or plate-like element, which is positioned on a side of the container which is substantially opposite to the imaging device, the structural element being configured to reduce the amount of stray light which may be captured by the imaging device.
5. The detection device according to aspect 3 or 4, wherein the stray light reducing device includes at least one light absorbing means configured to at least partially absorb light, preferably stray light.
6. The detection device according to aspect 5, wherein the light absorbing means includes a coating, preferably a nanotube coating, the coating being configured to at least partially absorb light, preferably visible light, preferably stray light.
7. The detection device according to any of the preceding aspects, further including a support device configured to at least partially support the container during operation of the detection device.
8. The detection device according to any of the preceding aspects, further including at least one positioning mechanism configured to substantially provide the container in a predetermined position and/or a predetermined orientation.
9. The detection device according to any the preceding aspects, wherein the support device includes at least one recess configured to at least partially receive the container as the imaging device captures the image of the illuminated sample liquid, preferably wherein a sidewall of the container is at least partially received in the support device, preferably in the at least one recess.
10. The detection device according to aspect 9, wherein the recess has a recess depth extending into the support device in at least a section of the support device, wherein the recess depth is dimensioned such that at least 50%, preferably at least 60%, more preferably at least 70%, more preferably at least 80%, more preferably at least 90%, of a wall thickness of the container, preferably at least the entire wall thickness, may be received in the recess.
11. The detection device according to any of aspects 7 to 10, wherein the support device is configured such that a section of the container, which is arranged at an interface between the support device and the container, is substantially flush with a surface of the support device, when the container is supported by the support device.
12. The detection device according to any of aspects 9 to 11,
   wherein the recess is u-shaped or v-shaped; and/or
   wherein the recess is an elongate notch.
13. The detection device according to any of the preceding aspects, further including at least one adjusting device configured to adjust a position and/or an orientation of the container relative to the light device and/or the imaging device.
14. The detection device according to any of the preceding aspects, wherein the light device includes a light guiding device configured to guide the light generated by the light device towards the container.
15. The detection device according to any of the preceding aspects, wherein the detection device, preferably the evaluating device, is configured to provide at least one degree of turbidity of the sample liquid in Nephelometric Turbidity Units (NTU) and/or Formazin Nephelometric Units (FNU) and/or Formazin Turbidity Units (FTU).
16. The detection device according to any of the preceding aspects, wherein the detection device, preferably the evaluating device, is configured to access one or more pixel intensities of the image of the illuminated sample liquid and compare the pixel intensities with one or more references to determine the degree of turbidity.
17. The detection device according to aspect 16, wherein the references include pixel intensities of at least one image of at least one reference solution.
18. The detection device according to any of the preceding aspects, wherein the detection device is configured to compare, preferably via the evaluating device, the determined degree of turbidity with at least one predetermined threshold degree of turbidity and provide a warning signal if the determined degree of turbidity surpasses the predetermined threshold degree of turbidity.
19. The detection device according to any of the preceding aspects, wherein the detection device is configured to determine a coloration of the sample liquid and compare, preferably via the evaluating device, the determined coloration with one or more predetermined coloration criteria, preferably including at least one predetermined coloration threshold, and provide a warning signal if the determined coloration meets and/or does not meet the one or more predetermined coloration criteria.
20. The detection device according to any of the preceding aspects, further including at least one further light device configured to generate light in order to at least partially illuminate the sample liquid, wherein the further light device is arranged to emit light in a direction which extends substantially along the main optical axis of the imaging device, preferably substantially towards the imaging device.
21. The detection device according any of the preceding aspects, wherein the detection device, preferably the evaluating device, is configured to adjust the determined degree of turbidity based at least on at least one property, preferably at least one light intensity, of the light which is generated by the light device.
22. A kit including a detection device according to any of the preceding aspects and at least one evaluating device configured to receive the data related to the image of an illuminated sample liquid arranged in a container which is provided by the detection device, wherein the evaluating device is configured to determine at least one degree of turbidity of the sample liquid and/or one or more physical properties of one or more particles in the sample liquid based at least on the data related to the image of the illuminated sample liquid
23. The kit according to aspect 22, wherein the evaluating device is a remote device which is communicatively connectable, preferably via a wireless connection, with the detection device, preferably with at least the imaging device.
24. The kit according to aspect 22 or 23, wherein the detection device, preferably the evaluating device, is configured to provide at least one degree of turbidity of the sample liquid in Nephelometric Turbidity Units (NTU) and/or Formazin Nephelometric Units (FNU) and/or Formazin Turbidity Units (FTU).
25. A method for non-destructively determining a degree of turbidity of a sample liquid arranged in at least one at least partially translucent container using the detection device according to any of aspects 1 to 21, the method including:
   accessing one or more pixel intensities of an image of the illuminated sample liquid which is provided by the detection device; and
   comparing the pixel intensities with one or more references to determine the degree of turbidity.
26. The method according to aspect 25, wherein the references include pixel intensities of at least one image of at least one reference solution.
27. A method for non-destructively detecting one or more properties of one or more particles in a sample liquid arranged in at least one at least partially translucent container using the detection device according to any of aspects 1 to 21, the method including the step of:
   identifying the one or more properties of the one or more particles from an image of the illuminated sample liquid which is provided by the detection device.
28. A detection device for non-destructively detecting at least one coloration of a sample liquid arranged in at least one at least partially translucent container, the detection device including:
   at least one light device configured to generate light in order to at least partially illuminate the sample liquid; and
   at least one imaging device configured to capture at least one image of at least a section of the illuminated sample liquid, wherein the imaging device is communicatively connectable to an evaluating device to provide data related to the image of the illuminated sample liquid to the evaluating device, the evaluating device being configured to determine at least one coloration of the sample liquid based at least on the data related to the image of the illuminated sample liquid.
29. The detection device according to aspect 28, wherein the detection device, preferably the evaluating device, is configured to adjust the determined coloration based at least on at least one property, preferably at least one light intensity, of the light which is generated by the light device.
30. The detection device according to aspect 28 or 29, wherein the detection device, preferably the evaluating device, is configured to determine at least one light intensity and/or at least one coloration of the light, which is emitted by the light device, preferably adjacent to the container, and adjust the determined coloration of the sample liquid based on a deviation of the determined intensity and/or coloration of the light from a reference light intensity and/or a reference coloration, respectively.
31. The detection device according to any of aspects 28 to 30, wherein the detection device, preferably the evaluating device, is configured to at least partially capture at least one illuminated reference surface which is at least partially illuminated by the light emitted by the light device, and wherein the detection device, preferably the evaluating device, is configured to adjust the determined coloration based on data related to the illuminated reference surface provided by the image.
32. The detection device according to aspect 31, wherein the illuminated reference surface, which is preferably configured as a background surface, is arranged behind the container with respect to a direction extending from the imaging device towards the container, and wherein the illuminated reference surface is larger than a projected area of the container when projected along the main optical axis to the reference surface.
33. The detection device according to aspect 31 or 32, wherein the detection device, preferably the evaluating device, is configured to adjust the determined coloration of the sample liquid based on a deviation of the determined intensity and/or coloration of the light from a reference light intensity and/or a reference coloration determined for the illuminated reference surface, respectively.
34. The detection device according to any of aspects 28 to 33, wherein the imaging device is configured to capture at least one light device reference surface of a light-emitting section of the light device in the image, and wherein the detection device, preferably the evaluating device, is configured to adjust the determined coloration based on data related to the light device reference surface provided by the image.
35. The detection device according to any of aspects 28 to 34, wherein the detection device, preferably the imaging device, is configured to capture at least a portion of the light which is generated by the light device, wherein the captured light is unperturbed by the container and/or the sample liquid.
36. The detection device according to any of aspects 28 to 35, wherein the imaging device has a main optical axis and the light device is arranged to emit light in a direction which extends substantially along the main optical axis, preferably towards the imaging device.
37. The detection device according to any of aspects 28 or 36, wherein the imaging device includes at least one optical element, preferably a lens, preferably a telecentric lens, and at least one image sensor, wherein the optical element is configured to project an image of the illuminated sample liquid onto the image sensor to capture the image of the illuminated sample liquid.
38. The detection device according to any of aspects 28 to 37, wherein the light device is arranged on a side of the container which is substantially opposite to the imaging device to provide background lighting to the container.
39. The detection device according to any of aspects 28 to 38, wherein the light device has a light emitting surface which is larger than a projected area of the container which is projected in a direction towards the light device.
40. The detection device according to any of aspects 28 to 39, wherein the evaluating device is configured to determine at least one light intensity and/or at least one coloration of the light, which is emitted by the light device, adjacent to the container.
41. The detection device according to any of aspects 28 to 40, further including at least one further light device configured to generate light in order to at least partially illuminate the sample liquid, wherein the further light device is arranged to emit light in a direction which intersects the main optical axis of the imaging device at an angle from 35° to 145°, preferably from 65° to 115°, wherein the evaluating device is configured to determine at least one degree of turbidity of the sample liquid and/or one or more properties of one or more particles in the sample liquid based at least on the data related to the image of the illuminated sample liquid.
42. The detection device according to aspect 41, wherein the detection device is configured to compare, preferably the evaluating device, the determined degree of turbidity with at least one predetermined threshold degree of turbidity and provide a warning signal if the determined degree of turbidity surpasses the predetermined threshold degree of turbidity.
43. The detection device according to any of aspects 28 to 42, wherein the detection device is configured to compare, preferably via the evaluating device, the determined coloration of the sample liquid with one or more predetermined coloration criteria, preferably including at least one predetermined coloration threshold, and provide a warning signal if the determined coloration meets and/or does not meet the one or more predetermined coloration criteria.
44. The detection device according to any of aspects 28 to 43, wherein the detection device, preferably the evaluating device, is configured to access one or more color pixel values of the image of the illuminated sample liquid and/or match the color pixel values to reference values to determine a coloration of the sample liquid.
45. The detection device according to aspect 44, wherein the color pixel values and/or reference value include one or more of the following: one or more RGB color space values, one or more XYZ color space values, one or more L^{∗}a^{∗}b^{∗} color space values, one or more CMYK color space values, one or more YIQ color space values, one or more YPbPr color space values, one or more HSV color space values, one or more HSL color space values and/or one or more L*C*h color space values.
46. A detection system including the detection device of any of aspects 1 to 21 and the detection device of any of aspects 28 to 45, wherein the detection device of any of aspects 1 to 21 and the detection device of any of aspects 28 to 45 are combined in a single device.
47. The detection system according to aspect 46, including a background adjusting device configured to adjust a background, preferably the darkness of the background, behind the container, with respect to a direction extending from the imaging device towards the container.
48. A kit including a detection device according to any of aspects 28 to 45 and at least one evaluating device configured to receive data relating to at least one image of at least a section of an illuminated sample liquid arranged in at least one at least partially translucent container, wherein the evaluating device is configured to determine at least one coloration of the sample liquid based at least on the data related to the image of the illuminated sample liquid.
49. The kit according to aspect 48, wherein the evaluating device is a remote device which is communicatively connectable, preferably via a wireless connection, with the detection device, preferably with at least the imaging device.
50. A method for non-destructively detecting at least one coloration of a sample liquid arranged in at least one at least partially translucent container using the detection device according to any of aspects 28 to 45, wherein the method includes:
   accessing one or more color pixel values of the image of the illuminated sample liquid which is provided by the detection device; and/or
   matching the color pixel values to one or more reference values to determine a coloration of the sample liquid.
51. The method according to aspect 50, wherein the color pixel values and/or the reference values include one or more of the following: one or more RGB color space values, one or more XYZ color space values, one or more L^{∗}a^{∗}b^{∗} color space values, one or more CMYK color space values, one or more YIQ color space values, one or more YPbPr color space values, one or more HSV color space values, one or more HSL color space values and one or more L*C*h color space values.
52. The method according to aspect 50 or 51, further including:
   determining at least one light intensity and/or at least one coloration of the light, which is emitted by the light device, preferably adjacent to the container; and
   adjusting the determined coloration of the sample liquid based on a deviation of the determined intensity and/or coloration of the light from a reference light intensity and/or a reference coloration, respectively.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: shows, in a schematic side view, a detection device for detecting a turbidity of a sample fluid and/or one or more physical properties of one or more particles in the sample liquid according to an embodiment of the present disclosure;
- Fig. 2: shows, in a schematic side view, a modified embodiment of the detection device shown in Fig. 1;
- Fig. 3: shows, in a schematic top view, a modified embodiment of the detection device shown in Fig. 2;
- Fig. 4: shows, in a schematic front view, the detection device shown in Fig. 1;
- Fig. 5: shows, in a schematic front view, a modified embodiment of the detection device shown in Fig. 4;
- Fig. 6: shows, in a schematic side view, a detection device for detecting a coloration of a sample fluid according to a further embodiment of the present disclosure;
- Fig. 7: shows, in a schematic front view, the detection device shown in Fig. 6;
- Fig. 8: shows, in a schematic front view, a modified embodiment of the detection device shown in Fig. 7.

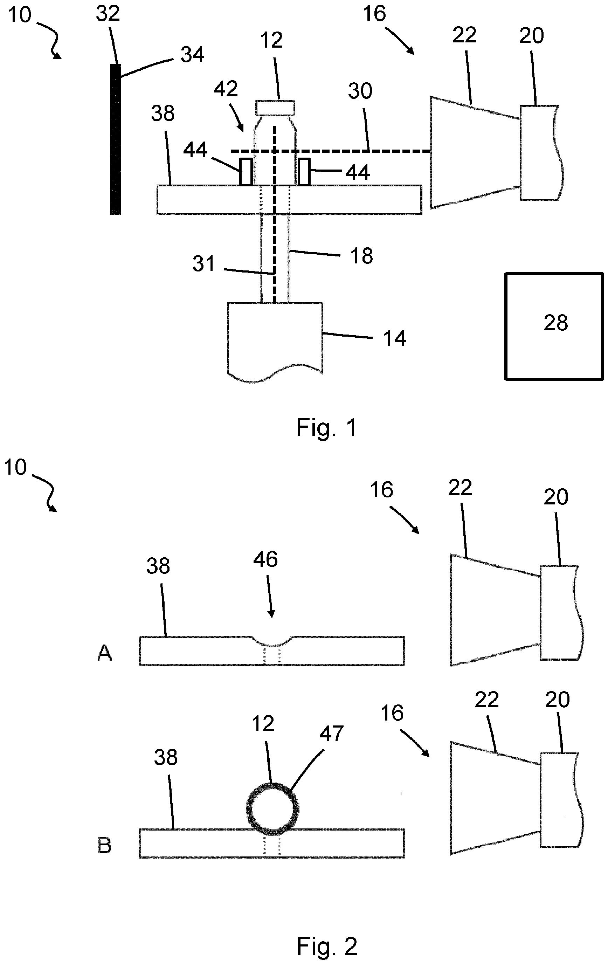

Fig. 1 shows a detection device 10 for non-destructively detecting at least one degree of turbidity of a sample liquid and/or one or more physical properties of one or more particles in the sample liquid. As can be seen in Fig. 1, the sample liquid is arranged in at least one at least partially translucent container 12. The detection device 10 includes at least one light device 14 configured to generate light in order to at least partially illuminate the sample liquid and at least one imaging device 16 configured to capture at least one image of at least a section of the illuminated sample liquid. Moreover, a light guiding device 18, which may include one or more fiber light guides, is provided to guide the light generated by the light device 14 towards the container 12. In addition, the imaging device 16 includes at least one image sensor 20 and at least one optical element 22, preferably at least one lens, configured to project an image of the illuminated sample liquid onto the image sensor 20 to capture an image of the illuminated sample liquid.

The imaging device 16 may be communicatively connectable to an evaluating device 28 to provide data related to the image of the illuminated sample liquid to the evaluating device 28. The evaluating device 28 may be configured to determine at least one degree of turbidity of the sample liquid and/or one or more properties of one or more particles in the sample liquid based at least on the data related to the image of the illuminated sample liquid. For instance, the detection device 10, preferably the evaluating device 28, may be configured to access one or more pixel intensities of the image of the illuminated sample liquid and compare the pixel intensities with one or more references to determine the degree of turbidity of the sample liquid and/orthe one or more properties of the one or more particles in the sample liquid. The references may include pixel intensities of at least one image of at least one reference solution.

Moreover, the imaging device 16 has a main optical axis 30 and the light device 14 is arranged to emit light in a direction 31 which intersects the main optical axis 30 of the imaging device 16 at an angle from 35° to 145°, preferably from 65° to 115°. As shown in Fig. 1 in an exemplary manner, the angle at which the direction 31 in which the light is emitted by the light device 14, intersects the main optical axis 30 of the imaging device 16 is approximately 90° in the embodiment according to Fig. 1.

Furthermore, a background 32 is provided behind the container 12, with respect to a direction extending from the imaging device 16 towards the container 12. The background 32 is positioned on a side of the container 12 which is substantially opposite to the imaging device 16. The background 32 may be configured as a plate or plate-like element. The background 32, or at least a portion of a surface 34 of the background 32 facing towards the imaging device 16, is preferably dark colored, preferably black. For this purpose, at least a section of the surface 34 may be coated by a dark colored pigmented substance, such as a paint. Providing a dark colored background may at least partially absorb stray light which may be captured by the imaging device 16.

In addition, a support device 38 is provided with at least one positioning mechanism 42 configured to substantially provide the container 12 in a predetermined position and/or a predetermined orientation. As shown in Fig. 1 in an exemplary manner, the positioning mechanism 42 includes one or more features configured to urge the container 12 towards the predetermined (centered) position. The one or more features may include one or more projections 44, e.g., one or more pins, as shown in Fig. 1. Alternatively, the one or more features may include one or more ridges or any other features suitable for defining, or at least contributing to defining, a predetermined position and/or a predetermined orientation for the container 12. The support device 38 and/or the container 12 may be configured such that the container 12, which is configured as a vial in Fig. 1 as an example, may be positioned in an upright position, as shown in Fig. 1, e.g. during turbidity measurement. Alternatively, the support device 38 and/or the container 12 may be configured such that a side, e.g., a sidewall, of the container 12 may rest on the support device 38, as described further below.

As shown in Fig. 1, the light device 14 and/or the light guiding device 18 may be arranged below the container 12 during turbidity measurement. The light device 14 and/or the light guiding device 18 may be arranged in and/or below the support device 38.

Instead of using the light guiding device 18, a corresponding light device 14 (e.g., one or more LEDs) could be provided within the support device 38.

The detection device 10 may further include at least one adjusting device (not shown) configured to adjust a position and/or an orientation of the container 12 relative to the light device 14 and/or the imaging device 16.

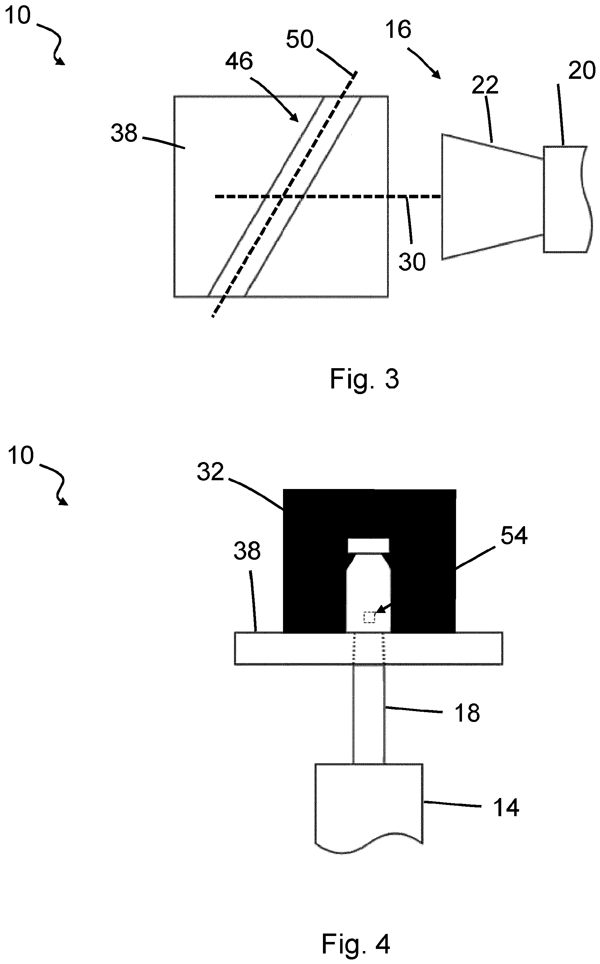

Figs. 2 and 3 show a modified embodiment of the detection device 10 shown in Fig. 1. In particular, the detection device 10 shown in Fig. 2 includes a recess 46 provided in the support device 38 to at least partially receive the container 12 as the imaging device 16 captures the image of the illuminated sample liquid. Preferably, a sidewall 47 of the container 12 is at least partially received in the recess 46. Thus, the sidewall 47 of the container 12 rests on the support device 38. Preferably, a section of the sidewall 47, which interfaces the recess 46, when the container 12 is supported by the support device 38, is substantially flush with a surface of the recess 46. The dimension(s) and/or the shape of the recess 46 may therefore be at least partially adapted to the dimension(s) and/or the shape of the sidewall 46 of the container 12 to facilitate a flush abutment at at least a section of the interface between the container 12 and the support device 38, more specifically the recess 46.

In view A of Fig. 2, the support device 38 is shown in a state in which the container 12 is not arranged on the support device 38. In view B of Fig. 2, the support device 38 is shown in a state in which the container 12 is arranged on the support device 38 and partially within the recess 46. For the sake of clarity, the light device 14 and the evaluating device 28 have been omitted from the depiction of the detection device 10 in Figs. 2 and 3. The recess 46 may be considered to be a positioning mechanism configured to substantially provide the container 12 in a predetermined position and/or a predetermined orientation, as described above, e.g. with the longitudinal axis and/or sidewall of the container extending in a generally horizontal direction. Alternatively, or additionally, the projections 44 shown in Fig. 1 and described above may be provided as a positioning mechanism.

The recess 46 may be configured to extend in a direction which intersects the main optical axis 30 of the imaging device 16 at various angles, including a perpendicular intersection, as shown in Fig. 2. However, the inventor has found that configuring the recess 46 such that the recess 46, more specifically a longitudinal axis 50 of the recess 46 and/or a direction in which the recess 46 extends along a surface of the support device 38, extends at a non-perpendicular angle, preferably from 20° to 40°, more preferably from 25° to 35°, most preferably at 30°, relative to the main optical axis 30 of the light device 16, preferably in a longitudinal plane and/or a horizontal plane, as shown in Fig. 3, may be advantageous. In particular, such a configuration may (further) optimize the illumination of the sample liquid in the container 12 and/or may enhance the sensitivity of the detection device 10 for detecting, in particular accurately and/or reliably detecting, the at least one degree of turbidity of the sample liquid and/or the one or more physical properties of one or more particles in the sample liquid. Moreover, this may reduce the amount of stray light, e.g., which is directed towards the imaging device 16 directly from the light device 14 and/or which is reflected off of the container 12 and/or the support device 38 and/or another object which may be captured by the imaging device 16. In other words, the support device 38 may be configured such that the container sidewall and/or the container longitudinal axis is disposed at a non-perpendicular angle, preferably from 20° to 40°, more preferably from 25° to 35°, most preferably at 30° relative to the main optical axis 30 of the light device 16.

As shown in Fig. 4, the imaging device 16 may be configured to capture at least one region of interest 54 of the illuminated sample liquid. The detection device 10, specifically the evaluating device 28, may determine at least one degree of turbidity of the sample liquid and/or one or more properties of one or more particles in the sample liquid based at least on the data related to the image of the illuminated sample liquid in the region of interest 54. The detection device 10 may be configured to capture and process a plurality of regions of interest 54.

One or more properties, e.g., at least one light intensity and/or at least one coloration, of the light generated by the light device 14 may vary, e.g., across one or more sections of the generated light and/or over time. Such an inconsistency of the one or more properties of the light generated by the light device 14 may prevent, or at least impair, an accurate determination of the turbidity of the sample liquid and/or the properties of the particles in the sample liquid. This may cause image-to-image variations of the accuracy and/or sensitivity and/or reliability in the determined values or value ranges. Thus, preferably, the detection device 10, preferably the evaluating device 28, is configured to determine at least one property of the light emitted by the light device 14, e.g., at least one light intensity and/or at least one coloration of the light, and adjust the determined degree of turbidity of the sample liquid and/or the properties of the particles in the sample liquid based on a deviation of the determined property or properties, e.g., an intensity of the light and/or a coloration of the light, from a reference property, e.g., a reference light intensity and/or a reference color, respectively. This may at least partially compensate for such variations in the light generated and emitted by the light device 14 which may increase the accuracy of the detection device 10.

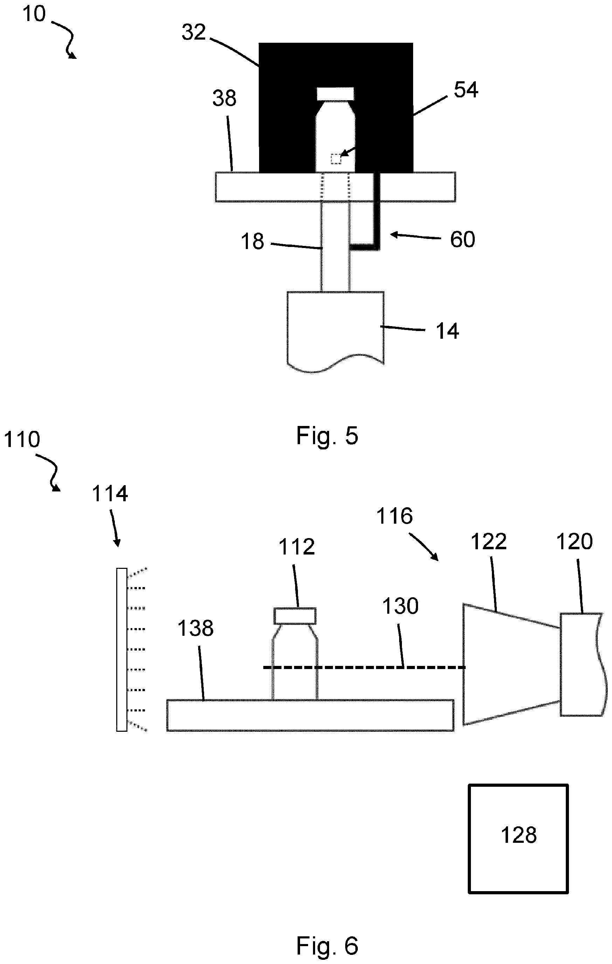

For instance, as shown in Fig. 5, a portion of the light generated by the light device 14 may be diverted from the light device 14 and/or the light guiding device 18, e.g., by a light diverting device 60, which may be configured as a light guiding device. The one or more properties of the light emitted by the light device 14 may be determined based on the diverted portion of the light, as shown in Fig. 5. The determined degree of turbidity of the sample liquid and/or the determined one or more properties of the one or more particles in the sample liquid may be adjusted based on the determined property or properties of the light, preferably based on a deviation of the determined property or properties, e.g., an intensity of the light and/or a coloration of the light, from a reference property, e.g., a reference light intensity and/or a reference light color, respectively. The diverted light may be fed directly to the imaging device 16.

Figs. 6 to 8 show various embodiments of a detection device 110 for non-destructively detecting at least one coloration of a sample liquid arranged in at least one at least partially translucent container 112. The detection device 110 includes at least one light device 116 configured to generate light in order to at least partially illuminate the sample liquid and at least one imaging device 114 configured to capture at least one image of at least a section of the illuminated sample liquid. The imaging device 116 may be communicatively connectable to an evaluating device 128 to provide data related to the image of the illuminated sample liquid to the evaluating device 128. The evaluating device 128 may be configured to determine at least one coloration of the sample liquid based at least on the data related to the image of the illuminated sample liquid. In addition, the imaging device 116 includes at least one image sensor 120 and at least one optical element 122, preferably at least one lens, configured to project an image of the illuminated sample liquid onto the image sensor 120 to capture an image of the illuminated sample liquid.

For instance, the detection device 110, preferably the evaluating device 128, may be configured to access one or more color pixel values of the image of the illuminated sample liquid and/or match the color pixel values to reference values to determine a coloration of the sample liquid. The color pixel values and/or reference value include one or more of the following: one or more RGB color space values, one or more XYZ color space values, one or more L*a*b* color space values, one or more CMYK color space values, one or more YIQ color space values, one or more YPbPr color space values, one or more HSV color space values, one or more HSL color space values and/or one or more L*C*h color space values.

In analogy to the embodiments of the detection device 10 shown in Figs. 1 to 5, the container 112 is arranged on a support device 138. The support device 138 may include a positioning mechanism, such as the positioning mechanism 42 shown in Fig. 1, configured to substantially provide the container 112 in a predetermined position and/or a predetermined orientation. Alternatively, or additionally, the support device 138 may include a recess, such as the recess 46 shown in Figs. 2 and 3, to at least partially receive the container 112 as the imaging device 116 captures the image of the illuminated sample liquid.

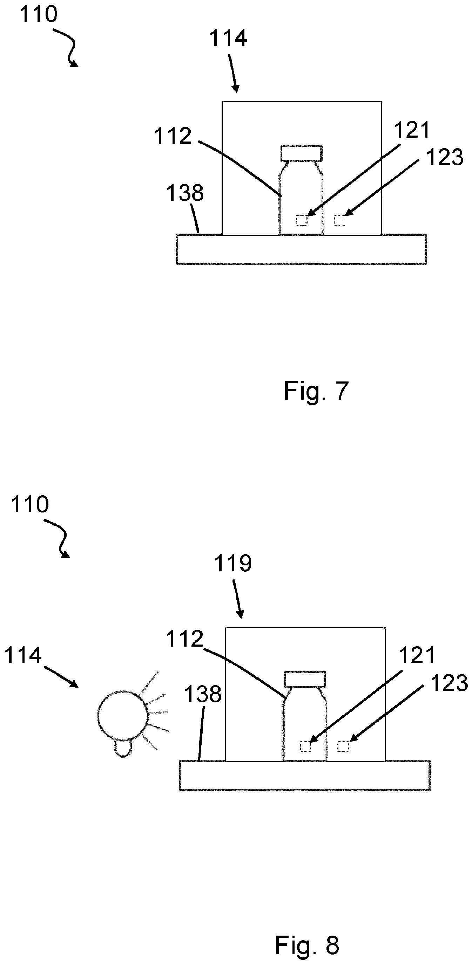

As shown in Figs. 6 and 7, the light device 116 may be arranged behind the container 112, with respect to a direction extending from the imaging device 116 towards the container 112. Hence, the light device 116 provides background lighting to the container 112 in the arrangement shown in Figs. 6 and 7.

Alternatively, as shown in Fig. 8, a light colored, e.g., white, background surface 119 may be arranged behind the container 112, with respect to a direction extending from the imaging device 116 towards the container 112, instead of the light device 114 behind the container. The light device 114 is arranged laterally from the container 112, i.e., in a direction which is substantially perpendicular to a direction extending from the imaging device 116 towards the container 112. In particular, the light device 114 is arranged to illuminate the sample liquid, which is arranged in the container 112, and at least a section of the background surface 119.

As shown in Figs. 7 and 8, the imaging device 116 is configured and arranged to capture at least one region of interest 121 of the illuminated sample liquid in an image. The detection device 110, specifically the evaluating device 128, may determine at least one coloration of the sample liquid based at least on the data related to the image of the illuminated sample liquid in the region of interest 121. The detection device 110 may be configured to capture and process a plurality of regions of interest 121.

Moreover, as described above with respect to the detection device 110 shown in Figs. 1 to 5, one or more properties, e.g., at least one light intensity and/or at least one coloration, of the light generated by the light device 114 may vary, e.g., across a section of the generated light and/or over time. Such an inconsistency of one or more properties of the light generated by the light device 114 may prevent an accurate determination of the coloration of the sample liquid. This may cause image-to-image variations of the accuracy and/or sensitivity and/or reliability in the determined coloration. Thus, preferably, the detection device 110, preferably the evaluating device 128, may be configured to determine at least one property of the light emitted by the light device 114, e.g., at least one light intensity and/or at least one coloration of the light, and adjust the determined degree of coloration of the sample liquid, preferably based on a deviation of the determined property or properties, e.g., light intensity and/or light coloration, from a reference property, e.g., a reference light intensity and/or a reference color, respectively. This may at least partially compensate for such variations in the light generated and emitted by the light device 114 which may increase the accuracy of the detection device 110 in determining the turbidity of the sample liquid.

For instance, as shown in Fig. 7, a light emitting section of the light device 114 may be captured in an image by the imaging device 116, wherein the image in which the light emitting section of the light device 114 is captured may be the same image as the image in which the sample liquid is captured for determining the coloration of the sample liquid. Alternatively, the image in which the light emitting section of the light device 114 is captured may be a different image than the image in which the sample liquid is captured for determining the coloration of the sample liquid. Based on the image in which the light emitting section of the light device 114 is captured, the one or more properties of the light emitted by the light device 114 may be determined, based on which the determined coloration of the sample liquid may be adjusted.

Alternatively, as shown in Fig. 8, an illuminated section 123 of the background surface 119 may be captured in an image by the imaging device 116, wherein the image in which the illuminated section 123 of the background surface 119 is captured may be the same image as the image in which the sample liquid is captured for determining the coloration of the sample liquid. Alternatively, the image in which the illuminated section 123 of the background surface 119 is captured may be a different image than the image in which the sample liquid is captured for determining the coloration of the sample liquid. Based on the image in which the illuminated section 123 of the background surface 119 is captured, the one or more properties of the light emitted by the light device 114 may be determined, based on which the determined coloration of the sample liquid may be adjusted.

The detection device 10 shown in Figs. 1 to 5 and the detection device 110 shown in Figs. 6 to 8 may be separate and/or standalone detection devices which can be used independently from each other. Alternatively, the detection device 10 shown in Figs. 1 to 5 and the detection device 110 shown in Figs. 6 to 8 may be combined, e.g., in a single detection device or detection system. If the detection device 10 shown in Figs. 1 to 5 and the detection device 110 shown in Figs. 6 to 8 are combined, e.g., in a single detection device or a single detection system, the imaging device 16 included in the detection device 10 and the imaging device 116 included in the detection device 110 may be the same imaging device. In other words, the same imaging device may be provided for capturing at least one image of the sample liquid for determining at least one degree of turbidity of the sample liquid and/or one or more properties of one of more particles in the sample liquid, according to the function of the detection device 10, and for capturing at least one image of the sample liquid for determining at least one coloration of the sample liquid, according to the function of the detection device 110.

Likewise, if the detection device 10 shown in Figs. 1 to 5 and the detection device 110 shown in Figs. 6 to 8 are combined, e.g., in a single detection device or a single detection system, the light device 14 included the detection device 10 and the light device 114 included in the detection device 110 may be the same light device. In other words, the same light device may be provided for illuminating the sample liquid for determining at least one degree of turbidity of the sample liquid and/or one or more properties of one of more particles in the sample liquid, according to the function of the detection device 10, and for illuminating the sample liquid for determining at least one coloration of the sample liquid, according to the function of the detection device 110. The single detection device or the single detection system, i.e., in which the detection device 10 shown in Figs. 1 to 5 and the detection device 110 shown in Figs. 6 to 8 are combined, may include a plurality of light devices and/or a plurality of imaging devices.

## Claims

1. A detection device (10) for non-destructively detecting at least one degree of turbidity of a sample liquid and/or one or more physical properties of one or more particles in the sample liquid, the sample liquid being arranged in at least one at least partially translucent container (12), the detection device (10) including:
at least one light device (14) configured to generate light in order to at least partially illuminate the sample liquid; and
at least one imaging device (16) configured to capture at least one image of at least a section of the illuminated sample liquid, wherein the imaging device (16) is communicatively connectable to an evaluating device (28) to provide data related to the image of the illuminated sample liquid to the evaluating device (28), the evaluating device (28) being configured to determine at least one degree of turbidity of the sample liquid and/or one or more properties of one or
more particles in the sample liquid based at least on the data related to the image of the illuminated sample liquid;
wherein the imaging device (16) has a main optical axis (30) and the light device (14) is arranged to emit light in a direction (31) which intersects the main optical axis (30) of the imaging device (16) at an angle from 35° to 145°.

2. The detection device (10) according to claim 1, further including at least one stray light reducing device (32) configured to reduce the amount of stray light which may be captured by the imaging device (16).

3. The detection device (10) according to claim 1 or 2, wherein the detection device (10), preferably the evaluating device (28), is configured to provide at least one degree of turbidity of the sample liquid in Nephelometric Turbidity Units (NTU) and/or Formazin Nephelometric Units (FNU) and/or Formazin Turbidity Units (FTU).

4. The detection device (10) according to any of the preceding claims, wherein the detection device (10), preferably the evaluating device (28), is configured to access one or more pixel intensities of the image of the illuminated sample liquid and compare the pixel intensities with one or more references to determine the degree of turbidity.

5. The detection device (10) according to any of the preceding claims, wherein the detection device (10) is configured to determine a coloration of the sample liquid and compare, preferably via the evaluating device (28), the determined coloration with one or more predetermined coloration criteria, preferably including at least one predetermined coloration threshold, and provide a warning signal if the determined coloration meets and/or does not meet the one or more predetermined coloration criteria.

6. The detection device (10) according any of the preceding claims, wherein the detection device (10), preferably the evaluating device (28), is configured to adjust the determined degree of turbidity based at least on at least one property, preferably at least one light intensity, of the light which is generated by the light device (14).

7. The detection device (10) according any of the preceding claims, further including:
a support device (38) configured to at least partially support the container (12) during operation of the detection device (10), wherein the support device (38) includes at least one recess (46) configured to at least partially receive the container (12), preferably wherein a sidewall of the container (12) is at least partially received in the support device (38), preferably in the at least one recess (46);
and/or
at least one light shield arranged between the illuminated container and the imaging device (16), preferably wherein the at least one light shield extends at least partially along the longitudinal axis of the container (12).

8. A kit including a detection device (10) according to any of the preceding claims and at least one evaluating device (28) configured to receive the data related to the image of an illuminated sample liquid arranged in a container (12) which is provided by the detection device (10), wherein the evaluating device (28) is configured to determine at least one degree of turbidity of the sample liquid and/or one or more physical properties of one or more particles in the sample liquid based at least on the data related to the image of the illuminated sample liquid

9. A method for non-destructively determining a degree of turbidity of a sample liquid arranged in at least one at least partially translucent container (12) using the detection device (10) according to any of claims 1 to 7, the method including:
accessing one or more pixel intensities of an image of the illuminated sample liquid which is provided by the detection device (10); and
comparing the pixel intensities with one or more references to determine the degree of turbidity.

10. A method for non-destructively detecting one or more properties of one or more particles in a sample liquid arranged in at least one at least partially translucent container (12) using the detection device (10) according to any of claims 1 to 7, the method including the step of:
identifying the one or more properties of the one or more particles from an image of the illuminated sample liquid which is provided by the detection device (10).

11. A detection device (110) for non-destructively detecting at least one coloration of a sample liquid arranged in at least one at least partially translucent container (112), the detection device including:
at least one light device (114) configured to generate light in order to at least partially illuminate the sample liquid; and
at least one imaging device (116) configured to capture at least one image of at least a section of the illuminated sample liquid, wherein the imaging device (116) is communicatively connectable to an evaluating device (128) to provide data related to the image of the illuminated sample liquid to the evaluating device (128), the evaluating device (128) being configured to determine at least one coloration of the sample liquid based at least on the data related to the image of the illuminated sample liquid.

12. The detection device (110) according to claim 11, wherein the detection device (110), preferably the evaluating device (128), is configured to adjust the determined coloration based at least on at least one property, preferably at least one light intensity, of the light which is generated by the light device (114).

13. The detection device (110) according to claim 11 or 12, wherein the detection device (110), preferably the evaluating device (128), is configured to access one or more color pixel values of the image of the illuminated sample liquid and/or match the color pixel values to reference values to determine a coloration of the sample liquid.

14. The detection device (110) according to claim 13, wherein the color pixel values and/or reference value include one or more of the following: one or more RGB color space values, one or more XYZ color space values, one or more L*a*b* color space values, one or more CMYK color space values, one or more YIQ color space values, one or more YPbPr color space values, one or more HSV color space values, one or more HSL color space values and/or one or more L*C*h color space values.

15. A method for non-destructively detecting at least one coloration of a sample liquid arranged in at least one at least partially translucent container (112) using the detection device (110) according to any of claims 11 to 14, wherein the method includes:
accessing one or more color pixel values of the image of the illuminated sample liquid which is provided by the detection device (110); and/or
matching the color pixel values to one or more reference values to determine a coloration of the sample liquid.
